# EUROPEAN PATENT APPLICATION

(11) **EP 1 255 147 A2**
(43) Date of publication of application: **06.11.2002**
(21) Application number: 02253090.1
(22) Date of filing: 01.05.2002
(51) Int. Cl.: G02B 25/00

(54) **Visual aid**

(30) Priority: 03.05.2001 GB 0110816; 22.08.2001 GB 0120362
(71) Applicant: Raner, Lance Harold, Cambridge CB3 7AR (GB)
(72) Inventor: Raner, Lance Harold, Cambridge CB3 7AR (GB)
(74) Representative: Nash, Keith Wilfrid

(57) **Abstract**

Disclosed is a visual aid for use with a device (preferably an electronic device such as a mobile telephone), the aid comprising retaining means for retaining the device; and optical magnifying means for providing an operator of the device with a magnified view of at least part of the device; characterised in that the aid further comprises supporting means for supporting the magnifying means relative to the retaining means, the supporting means being capable of retaining the magnifying means at a plurality of spatial positions relative to the retaining means and hence the device.

## Description

### Field of invention

The present invention relates to visual aids. In particular, but not exclusively, the present invention relates to visual aids suitable for use with electronic devices, particularly mobile telephones.

### Background to the Invention

Electronic devices such as electronic calculators, personal organisers and mobile telephones have become progressively more compact and their display resolution has become finer. As a consequence, many people have found these electronic devices awkward to use. For example, people with large fingers experience difficulty with entering data correctly into calculator and mobile telephone keypads because keys of the keypads are too small and too closely spaced. Likewise, people who are visually handicapped, for example elderly people with deteriorating eye-sight, experience difficulty reading high-resolution image displays of mobile telephones and personal organisers, especially more modern WAP-type mobile telephones which include liquid crystal matrix displays capable of displaying Internet information.

Magnifiers for use with mobile telephones are known. For example, a company Powerlenz Corporation located in the United States manufactures a telescopic magnifier which is capable of providing enlarged views of mobile telephone liquid crystal displays. The magnifier is claimed to magnify by 150% a display area of a mobile telephone to which the magnifier is attached.

The inventor has appreciated the problem that higher degrees of display magnification are required by some visually impaired people when using mobile telephones. Such higher degrees of magnification are achievable by making lenses employed in the aforesaid magnifier more powerful but results in it becoming bulky and awkward to use. In order to address the problem, the inventor has devised a visual aid which is capable of providing an enhanced degree of magnification and yet being practical in use, both with electronic and other devices.

### Summary of the Invention

According to one aspect of the present invention, there is provided a visual aid for use with a device (preferably an electronic device), the aid comprising:
(a) retaining means for retaining the device;
(b) optical magnifying means for providing an operator of the device with a magnified view of at least part of the device;
characterised in that the aid further comprises supporting means for supporting the magnifying means relative to the retaining means, the supporting means being capable of retaining the magnifying means at a plurality of spatial positions relative to the retaining means and hence the device.

Preferably, the retaining means is a cradling means for holding and retaining the device

The invention provides the advantage that the magnifying means is capable of providing a highly magnified image of the device in a deployed state and being folded into a compact volume for storage.

The electronic device may be a mobile telephone. Preferably, the optical magnifying means enables an operator to see a magnified image of a mobile phone keypad, as well as a mobile display. Preferably, in a deployed state, an operator may reach under the magnifying means to operate a keypad.

The supporting means is preferably capable of retaining the magnifying means in a mutually abutting position relative to the retaining means when the aid is in a folded state, and in a mutually separated position relative to the retaining means when the aid is in a deployed state to provide the operator with a magnified view of the device. Spatially separating the magnifying means from the device provides an enhanced degree of magnification whereas mutually abutting the magnifying means and the retaining means together assists to ensure that the aid is compact when stored.

The magnifying means preferably includes at least one of a convex lens and a Fresnel lens. Fresnel lenses are potentially inexpensive to manufacture and occupy relatively little space when the aid is in the folded state. Conversely, convex lenses are readily available from several vendors and therefore easy to procure. More preferably, the convex lens is planar-convex, bi-convex or meniscus-convex. Planar-convex lenses can present the operator with a planar viewing surface in the aid. Bi-convex lenses provide the benefit that they can be made to have a relatively short focal length for a given surface curvature compared to planar convex lenses and therefore provide more magnification.

In some situations, a different viewing magnification is required for viewing a keypad of the device compared to a display of the device. Thus, the inventor has appreciated that differing degrees of device magnification are required. Therefore, the magnifying means preferably comprises a plurality of lenses, at least one lens for providing the operator with a magnified view of a display of the device and at least one lens for providing the operator with a magnified image of a keypad of the device.

The plurality of lenses are preferably of mutually different type; such a difference is beneficial where differing magnifications are required for viewing the keypad and display of the device.

The inventor has appreciated that it is desirable for the aid to be rapidly deployable, for example when making hasty emergency telephone calls. Therefore, the supporting means preferably comprises pneumatic actuating means for spatially distancing in use the magnifying means from the retaining means.

When implementing such pneumatic actuating means, it is preferable that the supporting means comprises at least one inflatable member included between the retaining means and the magnifying means, the at least one inflatable member being in fluid communication with at least one resilient operator-deformable chamber included in the retaining means, the at least one chamber serving when depressed to inflate the at least one inflatable member and thereby actuate the magnifying means relative to the retaining means. In such actuating means, it is to be understood that the term fluid includes both gases and liquids. Likewise, the term inflatable includes both gaseous and liquid inflation. Preferably, an appropriate quantity of fluid is provided within the at least one inflatable member and/or the at least one chamber.

The inventor has appreciated that the aid should be inexpensive to manufacture. Therefore, to avoid having to handle many parts when assembling the aid, the at least one inflatable member and the at least one deformable chamber are preferably of unitary construction.

Flexibility and robustness of the aid are beneficial characteristics. Moreover, physical protection of the device is also a desirable attribute. Thus, the at least one inflatable member and the at least one deformable chamber are advantageously fabricated from a rubber material. More preferably, the rubber material includes silicone rubber.

In order to make the rubber material more hardwearing and durable in use, the rubber material is preferably fibre reinforced.

As an alternative to the supporting means being implementing pneumatically, the supporting means preferably comprises elongate members at least partially slidably engaging onto the retaining means and the magnifying means for enabling the magnifying means to be repositioned relative to the retaining means. Such a form of construction for the supporting means enables it to be fabricated from simple mechanical components which are straightforward to mass-produce. The elongate members may be of adjustable length.

The elongate members are advantageously frictionally retained where slidably engaged so as to maintain the retaining means in fixed spatial relationship relative to the magnifying means when moved thereto by the operator. Such frictional retention ensures that the aid remains in a given configuration as set by the operator.

Frictional retention is in some situations inadequate. When it is desirable to further improve rigidity of the aid when in a deployed or folded state, the elongate members are preferably retained in one or more notches where slidably engaged so as to maintain the retaining means in fixed relationship relative to the magnifying means when moved thereto by the operator.

Rigidity of deployment of the aid can be further enhanced by use of one or more ratchets. Thus, the retaining means and the magnifying means are preferably maintained in a relative spatial position by ratchet means acting upon the elongate members. With rigid retention possible by the use of one or more ratchets, it is advantageous that the ratchet means is operator disengageable when readjusting spatial separation of the retaining means relative to the magnifying means.

Resilient biasing can also or alternatively be employed to assist the aid to retain a deployed state as set by the operator. Therefore, the elongate members are preferably resiliently biased towards a plurality of positions, thereby enabling the retaining means to be repositioned relative to the magnifying means by the operator applying a positional adjustment force to move the retaining means relative to the magnifying means from one biased position to another.

A further form of mechanical construction employs pivoted arms coupling the retaining means and the magnifier supporting means. These pivoted arms may be positioned on one side only of the retaining means and magnifier supporting means, or twin supporting arms respectively on opposite sides of the aid may be employed. Single arms may be used, in which case the magnifier supporting means displaces longitudinally relative to the retaining means when the magnifier supporting means is deployed, but a substantially straight relative movement of retaining means and the magnifier supporting means, normal to the planes of such means, can be achieved by use of single sided or twin sided scissor action arms. Friction pivots may enable the magnifier supporting means to be retained in the position to which it is deployed.

The retaining means itself may take some form of a tray or box, or possibly a pair of side supports between which the device, such as a mobile phone, can be fitted and retained. One simple form of fitting means may comprise locked pile stops, two on the device and two on the inside faces of the pair of side supports.

The retaining means may comprise a front or rear fascia or a casing for the device.

According to another aspect of the invention, there is provided a visual aid for use with a device (preferably an electronic device), the aid comprising:
(a) retaining means for retaining the device;
(b) optical magnifying means for providing an operator of the device with a magnified view of the device;
characterised in that the aid further comprises supporting means for supporting the magnifying means in proximate and spaced relationships to the retaining means, and an illuminating device carried by the magnifier supporting means in use for illuminating a device held by the retaining means.

The illuminating means may be employed in any of the constructions of aid hitherto envisaged and in practice may be arranged in use to illuminate a display section or a keypad section or both sections of an electronic device, such as a mobile telephone, retained by the retaining means.

The illuminating means may conveniently comprise a small strip light fixed along at least one side or end of the magnifier supporting means.

The inventor has appreciated to reduce cost that one or more of injection moulded components, machined components and extruded components are preferably employed for constructing the aid.

According to a further aspect of the present invention there is provided a device having the visual aid of either of the previous aspects of the invention attached thereto by the retaining means.

### Description of the Diagrams

Embodiments of the invention will now be described, by way of example only, with reference to the following diagrams in which:
- Figure 1: is an illustration of an electronic device aid according to the invention including a scissor-type mount for a magnifying lens;
- Figure 2: is an illustration in side view of an alternative slot 100a to that shown in Figure 1, with notches included for enabling the aid to be progressively deployed from a folded state to a fully deployed state;
- Figure 3: is an illustration in side view of an electronic device aid according to the invention including a collapsible concertina-type mount for a magnifying lens;
- Figure 4: is an illustration of an electronic device aid according to the invention including pivotally-mounted elongate members for maintaining a magnifying lens of the aid substantially parallel to an electronic device to be viewed;
- Figure 5: is schematic illustration of an electronic device aid according to the invention including an inflatable mount for a magnifying lens, in retracted (5a) and fully deployed (5b) configurations;
- Figure 6: is a schematic illustration of the aid in Figures 5 adapted for retention on a mobile telephone by Velcro-type strips in retrated (6a) and fully deployed (6b) configurations;
- Figure 7: is an illustration of an electronic device aid according to the invention including a single pivotally-mounted member onto which a magnifying lens is pivotally mounted, the aid providing not only adjustment of the lens spatial separation from the device but also tilt angle adjustment;

- Figures 8 to 10: show three further embodiments of the electronic device aid in accordance with the invention; and
- Figure 11: shows a modification in accordance with a further optional feature of the present invention.

### Description of Embodiments of the Invention

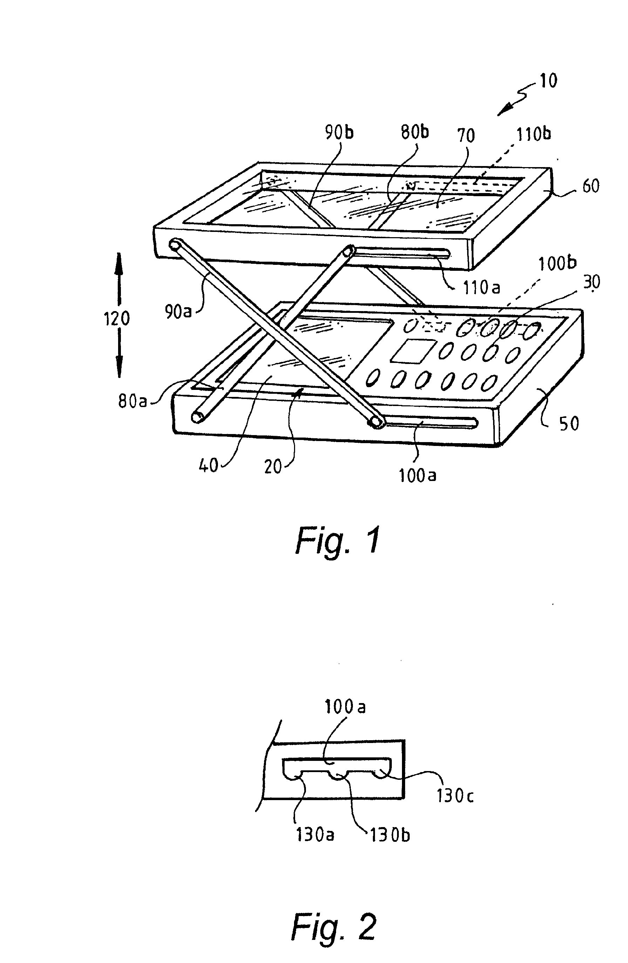

Referring to Figure 1, there is shown an electronic device aid indicated generally by 10. The aid 10 is attachable to a mobile telephone indicated by 20. The telephone 20 comprises a keypad 30 for entering numbers and similar data, for example for browsing Internet sites or for entering a telephone number. Moreover, the telephone 20 includes a liquid crystal pixel matrix display 40 for displaying one or more of images, character icons and digits.

The device aid 10 comprises a cradle member 50 for receiving and supporting the telephone 20 at a peripheral edge thereof and at a rear surface thereof remote from the keypad 30 and the display 40. The cradle member 50 is of a rectangular format and is fabricated from a machined, extruded or moulded material. The material is preferably a die-cast metal such as aluminium. Alternatively, the material is preferably a reinforced plastics material such as glass-filled nylon, polyethylene, polypropylene, polycarbonate, urea-formaldehyde resin. As a further alternative, the material can comprise silicone rubber, natural rubber or a wood composite to provide resilient protection for the telephone 20.

The cradle member 50 includes an aperture for receiving a stub antenna of the telephone 20 so that the antenna can project beyond the cradle member 50 for ensuring efficient radiation emission from the telephone 20.

The aid 10 further comprises a lens frame member 60 for receiving and supporting a magnifying lens assembly 70. The focal length of the assembly 70 is in the order of 10 to 300 mm. More preferably, the focal length of the assembly 70 is in a range of 30 to 100 mm. Most preferably, the focal length of the assembly 70 is substantially 50 mm.

The lens assembly 70 preferably comprises at least one planar-convex, bi-convex or meniscus convex lens. Alternatively, or additionally, the assembly 70 comprises at least one planar Fresnel lens. Plastic Fresnel lenses suitable for the aid 10 are, for example, manufactured and marketed by AWI Industries Inc. in the United States. The assembly 70 is designed to have a size and magnifying field of view substantially corresponding to the display 40 and keypad 30 of the telephone 20.

The assembly 70 is preferably fabricated from a substantially transparent glass or plastics material.

The lens assembly 70 can comprise a plurality of lenses, for example the assembly 70 can include two lenses, namely a first lens and a second lens for providing magnified views of the display 40 and the keypad 30 respectively, the first and second lenses being retained in mutually adjacent configuration in the lens frame member 60. If desired, the lenses can be of mutually different types; for example, one lens can be a Fresnel lens and another lens can be planar convex lens.

The aid 10 additionally comprises a first set of scissor-type members 80a, 90a on a left-hand-side of the aid 10 and a second set of scissor-type members 80b, 90b on a right-hand-side of the aid 10. The scissor-type members 80a, 80b are pivotally attached at first ends thereof to an externally-facing side surface the cradle member 50 towards an upper end of the aid 10 as illustrated, namely in the vicinity of the display 40. Likewise, the scissor-type members 90a, 90b are pivotally attached at first ends thereof to an externally-facing side surface of the lens frame member 60 towards an upper end of the frame member 60 as illustrated, the upper end of the lens frame member 60 corresponding to the upper end of the cradle member 50.

Towards a lower end of the cradle member 50 remote from the upper end thereof, there is provided first and second slots 100a, 100b on right-hand-side and left-hand-side externally-facing side surfaces of the cradle member 50 as illustrated. Second ends of the scissor-type members 90a, 90b are slidably retained within the slots 100a, 100b respectively.

Likewise, towards a lower end of the lens frame member 60 remote from the upper end thereof, there is provided third and fourth slots 110a, 110b on right-hand-side and left-hand-side externally-facing side surfaces of the frame member 60 as illustrated. Second ends of the scissor-type members 80a, 80b are slidably retained within the slots 110a, 110b respectively.

Operation of the aid 10 will now be described with reference to Figure 1.

The aid 10 is designed so that its frame member 60 can be in either folded or deployed states. In the folded state, the frame member 60 is pushed down to abut onto the cradle member 50 so that second ends of the scissor-type members 80a, 80b, 90a, 90b are retained at extreme end of the slots 100a, 100b, 110a, 100b respectively most remote from the display 40. In the folded position, the lens assembly 70 prevents access to the keypad 30 and provides a substantially unity magnification of the display 40. The folded state is utilized when the telephone 20 and its aid 10 are stored in an associated operator's pocket, briefcase or handbag for example.

When deploying the aid 10, the operator pulls the cradle member 50 apart from the lens frame member 60 in directions indicated by an arrow 120 so that the lens frame member 60 and its associated lens assembly 70 are spatially separated from the display 40 by a distance in the order of 20 to 50 mm, more preferably in the order of 30 to 40 mm, and most preferably substantially 35mm. When pulling the members 50, 60 apart, the second ends of the scissor-type members 80a, 80b, 90a, 90b slide along the slots 100a, 100b, 110a, 110b respectively towards the upper ends of the cradle and frame members 50, 60.

When the aid 10 is in a deployed state, the operator has access to the keypad 30 via a region bounded by the members 50, 60. The operator observes the display 40 through the lens assembly 70 and thereby receives a magnified image of the display 40.

The operator can, for example, dial a subscriber's telephone number on the keypad 30 and observe corresponding digits appear on the display 40 via the lens assembly 70. When a telephonic connection is made to the subscriber, the operator can push the members 50, 60 together in the folded state and then proceed to hold the telephone 20 and aid 10 to his or her ear and mouth to conduct a conversation.

Alternatively, the operator can for example, dial a subscriber's telephone number on the keypad 30 and then observe via the lens assembly 70 corresponding digits appear on the display 40. When a telephonic connection is made to the subscriber, the operator can remove the telephone 20 from the cradle member 50 and then conduct a conversation using the telephone 20 in a conventional manner. When the conversation has terminated, the user can reinsert the telephone into the cradle member 50 and then retract the lens frame member 70 to the folded state to retain the telephone 20 within the cradle member 60 where it is protected.

The cradle member 50 can be modified to additionally include one or more apertures for enabling an ear-piece/"hands-off" accessory to be connected to the telephone 20 whilst retained within the cradle member 50. Moreover, the cradle member 50 can also be modified to include one or more apertures for connecting a charging lead to the telephone 20.

The second ends of the scissor-type members 80a, 80b, 90a, 90b can be arranged to be a friction fit within the slots 100a, 100b, 110a, 110b so that the lens frame member 70 remains in position when pulled apart from the cradle member 50. Alternatively, the second ends of the scissor-type members 100a, 100b, 110a, 110b can be connected to springs included within the cradle member 50 so that the second ends are resiliently biased towards extreme end of the slots 100a, 110b, 110a, 110b. When such resilient biasing is employed, the lens frame member 70 preferentially remains in the folded or deployed state depending upon how the operator has moved the members 50, 60 relative to one another. The springs can be one or more of helical springs, leaf springs or resilient polymer spring elements.

As a further alternative, the slots 100a, 100b, 110a, 110b can include one or more notches for retaining the second end of the scissor-like members 80a, 80b, 90a, 90b in position. Such notches are illustrated in Figure 2. For example, the slot 100a is shown including three notches 130a, 130b, 130c. The notch 130a is at an end of the slot 100a nearest the display 40, whereas the notch 130c is most remote from the display 40. The notch 130b is at an intermediate position along the slot 100a midway between the slots 130a, 130c. Similarly, the slot 110a includes three notches 140a, 140b, 140c as illustrated, and so on.

When the lens frame member 60 is in the folded state, the second end of the scissor-like member 90a is engaged into the notch 130c and retained therein. Likewise, when the frame member 60 is in the deployed state, the second end of the member 90a is engaged into the notch 130a. In an intermediate state where the second end of the member 90a is engaged into the notch 130b, the lens assembly 70 provides an intermediate degree of magnification. Similar considerations pertain to the slots 100b, 110b and their associated notches.

The aid 10 can be further modified so that the scissor-like members 80a, 80b, 90a, 90b are engaged at extreme ends of the slots 100a, 100b, 110a, 110b by a toggle ratchet as employed in ball-point pens so that moving the scissor-like members 80a, 80b, 90a, 90b to the extreme ends of the slots 100a, 100b, 110a, 110b initially engages the toggle ratchet and then subsequent movement of the second ends of the members 80a, 80b, 90a, 90b towards the extreme end disengages the toggle ratchet allowing movement of the second ends along their respective slots.

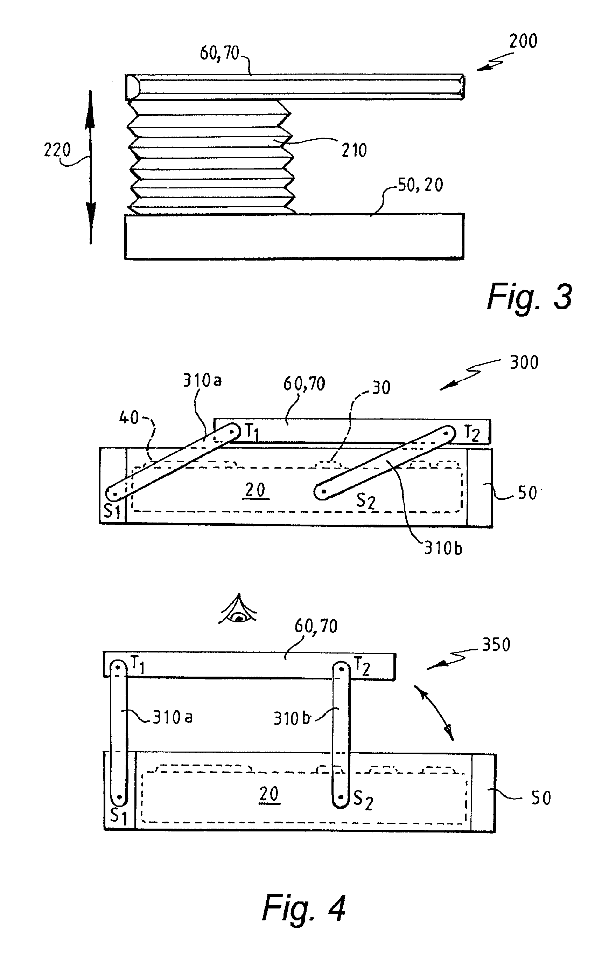

As an alternative to employing the scissor-like members 80a, 80b, 90a, 90b, the aid 10 can be provided with concertina-like supports 210 to provide an aid indicated generally by 200 in Figure 3. The aid includes two supports 210 on right-hand and left-hand sides of the telephone 20 retained within the cradle member 50. The supports 210 each include a wire frame covered in a PVC-backed cloth web as illustrated to provide an aesthetically pleasing appearance. The supports 210 are made sufficiently stiff to retain the lens frame member 60 in deployed and folded states when pulled or pushed by an operator of the aid 200 into these states in directions indicated by an arrow 220. Moreover, the supports 210 are sufficiently flexible to be flexed by moderate hand pressure. The wire frames of the supports 210 can, for example, be fabricated from "memory wire" which retains its bent state after being flexed into the state. Such "memory wire" characteristics can be achieved by employing bundles of parallel fine wires to fabricate the frame of each of the supports 210, the parallel wires being capable of sliding past one another when the supports 210 are flexed into position but having sufficient stiction therebetween to retain their position after hand force applied to the cradle and frame members 50, 60 has been removed. Alternatively, such "memory wire" characteristics can be achieved by employing special wire alloys.

The aforesaid PVC-backed web can be substituted by leather in a modified form of the aid 200.

As an alternative to employing "memory wire" for fabricating the frames of the supports 210, the supports 210 can be manufactured from compliant spring wire which is resiliently biased to render the aid 200 in the deployed state. When pushing the lens frame member 60 into contact with the cradle member 50 against the resilient spring force, a push-button latch (not shown) or similar retaining feature can latch the members 50, 60 together in the folded state. In use, releasing the latch causes the lens frame member 60 to snap into the deployed state by virtue of the resilient biasing force provided by the support members 210.

Referring now to Figure 4, there is illustrated another embodiment of an electronic device aid according to the invention, the aid indicated generally by 300 in a folded state and by 350 in a deployed state. The aid 300, 350 is capable of rapid deployment and maintaining its frame member 60 and lens assembly 70 substantially parallel to the telephone 20 mounted within the cradle member 50 of the aid 300, 350. The aid 300, 350 includes on each lateral side of the telephone 20 first and second pivotal elongate members 310a, 310b, which are adjustable in length. The first pivotal member 310a is pivotally attached at pivotal points S₁, T₁ to the cradle member 50 and the frame member 60 respectively. Likewise, the second pivotal member 310b is pivotally attached at pivotal points S₂, T₂ to the cradle member 50 and the frame member 60 respectively.

The members 310a, 310b can be adjusted so that they are of substantially similar length so that major planes of the frame member 60 and the lens assembly 70 remain substantially parallel to a corresponding major plane of the cradle member 50 and hence substantially parallel to a front face of the telephone 20 whereat the keypad 30 and the display 40 are located. When the aid 300 is manipulated into the deployed state, the frame member 60 pivots clear of the keypad 30 as illustrated enabling a user of the telephone 20 to gain access to the keypad 30.

The aid can also be adjusted so that the elongate members 310a are of greater length than the elongate members 310b so that the lens assembly 70 is tilted relative to the cradle member 50 in its deployed state, namely the lens assembly 70 is tilted towards a user holding the aid when deployed. Such tilting is especially preferable where the telephone 20 is a WAP-type device which is held at arm's length when in use.

In a further modified version of the aid 300, 350, the number of elongate members 310 can be varied so that the modified aid includes one or more pivotally-attached elongate members connecting the cradle member 50 to the frame member 60.

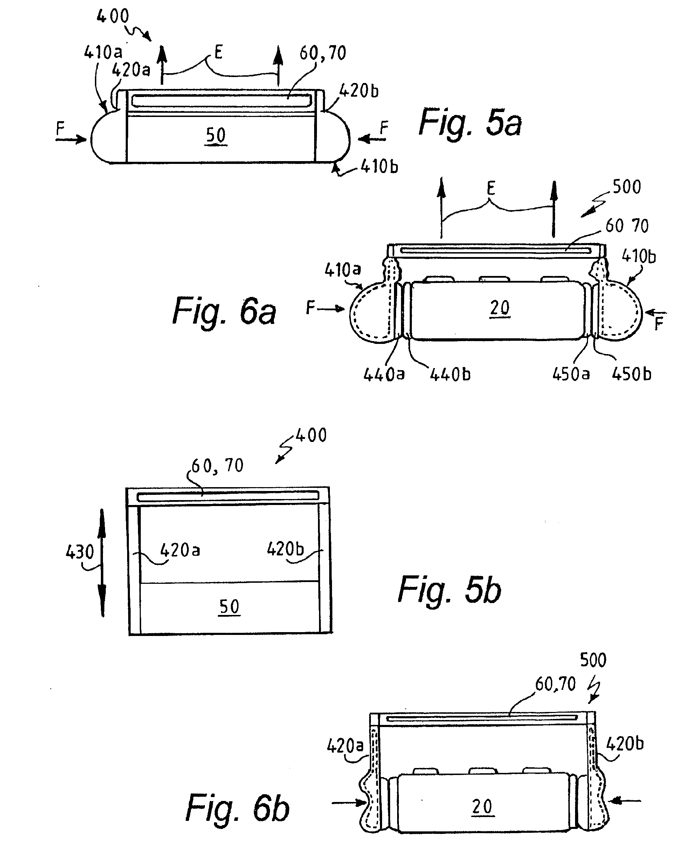

Referring now to Figure 5a, there is shown indicated generally by 400 an electronic device aid including an inflatable bellows-type mount for the lens assembly 70 in a collapsed state. An expanded state is illustrated in Figure 5b. The aid 400 includes the cradle member 50, the lens frame member 60 and its associated lens assembly 70. The cradle member 50 additional includes lateral hollow chambers 410a, 410b comprising flexible exterior side walls which an operator of the aid 400 can depress in use.

The aid 400 also comprises two hollow support members 420a, 420b whose interiors are in gaseous communication with hollow interiors of the lateral chambers 410a, 410b. The hollow interiors of the members 420a, 420b and the chambers 410a, 410b are sealed to atmosphere surrounding the aid 400 and its associated telephone 20 mounted within the cradle member 50 as illustrated.

The chambers 410a, 410b are designed so that they resiliently attain an expanded hollow state in the absence of lateral force applied to the chambers 410a, 410b. Likewise, the support members 420a. 420b are designed to resiliently attain a collapsed state in the absence of gas being forced at pressure into them, thereby rendering the aid 400 preferentially in a folded state (Figure 5) in the absence of a lateral force being applied to the chambers 410a, 410b. When the operator applies lateral force to the chambers 410a, 410b to collapse them, gas is ejected therefrom into the hollow support members 420a, 420b causing the lens frame member 60 to be actuated away from the cradle member 50, thereby rendering the aid 400 in a deployed state (Figure 5b). Finally, when the operator wants to return the aid 400 to its folded state, he or she releases hand pressure applied to the chambers 410a, 410b which causes the chambers 410a, 410b to retain their former expanded hollow state causing gas to be sucked out of the support members 420a, 420b thereby causing these members 420a, 420b to contract to their former collapsed state.

In the folded state (Figure 5a), the lens frame member 60 is in contact with the cradle member 50. The operator applies a force F to the chambers 410a, 410b , the force F being directed towards a central region of the telephone 20. The force F causes gas to be ejected from the chambers 410a, 410b causing a force E to be generated which actuates the frame member 60 away from the cradle member 50 in directions indicated by the arrow 430. The support members 420a, 420b thereby become inflated to render the aid 400 in the deployed state (Figure 5b).

The support members 420a, 420b can be ribbed in a concertina-type manner to ensure that they collapse compactly in the folded state (Figure 5b). Moreover, the chambers 410a, 410b are preferably fabricated from a synthetic rubber material, for example silicone rubber. If required, the rubber material can be reinforced with a flexible fabric mesh to render the aid 400 more durable in use. If desired, the cradle support 50, the chambers 410a, 410b and the lens frame support 60 of the aid 400 can be moulded as a unitary component.

Although the chambers 410a, 410b are described as being filled with gas, for example air, carbon dioxide, nitrogen or similar, they can alternatively be liquid filled, for example silicone oil filled. As a generalisation, the chambers 410a, 410b are fluid filled where the term fluid includes at least one of a gas and a liquid.

In the foregoing, the aids 10, 200, 300 attach to the mobile telephone 20 by way of the cradle member 50. Alternative forms of retention to the telephone 20 are possible. For example, in Figures 6a and 6b there is illustrated a modified electronic device aid indicated by 500 and shown in Figure 6a in a folded state and shown in Figure 6b in a deployed state, the modified aid being based upon the aid 400 illustrated in Figures 5a and 5b. The aid 500 is attached to the telephone using Velcro-type strips 440a, 440b, 450a, 450b. The strips 440b, 450a are adhesively bonded to lateral sides of the telephone 20. Moreover, the strips 440a, 450b are adhesively bonded, or integrally moulded, to inside-facing exterior surfaces of the chambers 410a, 410b. The strips 440a, 440b, 440a, 440b provide the benefit that a cradle member is not required. Moreover, one size or model of the aid 500 is capable of fitting to a variety of different telephones, personal organisers and calculators thereby circumventing a need to have a range of different aid sizes.

In operation, the strips 440a, 450b of the aid 500 co-operate by way of interlocking barbs with the strips 440b, 450a respectively to retain the aid 500 onto the telephone 20 in use.

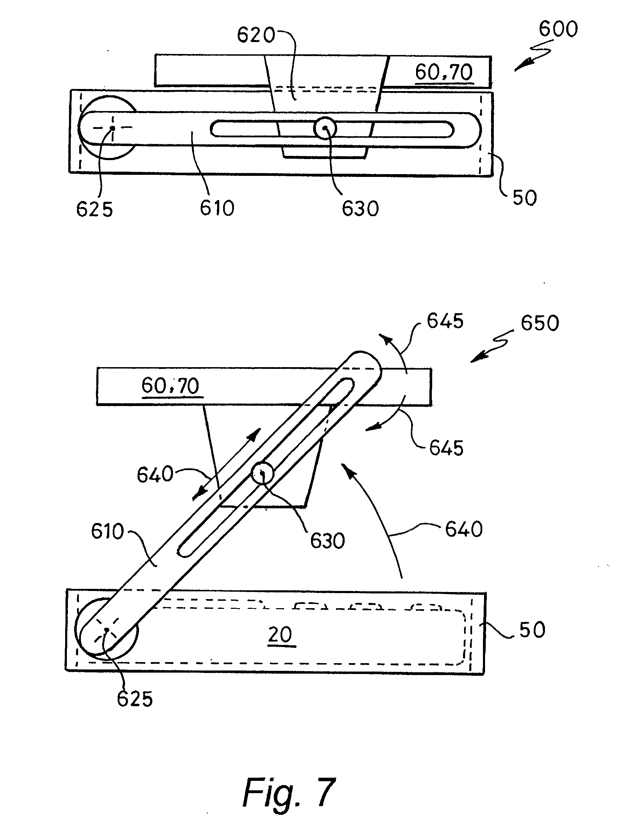

In Figure 7, there is illustrated an electronic device aid indicated by 600 in a folded state and by 650 in a deployed state. The aid 600, 650 comprises the cradle member 50, the frame member 60 and the lens assembly 70. Moreover, the aid 600, 650 includes a single pivotal member 610 which is pivotally attached to the cradle member 50 at an axis 625. Preferably, the pivotal attachment to the axis 625 is angularly step-wise biased so that the member 610 can be resiliently manipulated in a direction indicated by an arrow 640 and retained at a number angular step positions relative to the cradle member 50. The member 610 comprises a slot for receiving a lateral projection 620 of the frame member 60. The projection 620 is retained within the slot by means of a finger-turnable screw retainer 630. The projection 620, and hence the frame member 60, can be adjusted in position along the slot as indicated by an arrow 640. Moreover, on account of the screw retainer 630 providing a single point mounting for the frame member 60, the frame member 60 is angularly adjustable relative to the cradle member 50 as indicated by arrows 645.

In operation, the aid 600, 650 can be folded to provide a compact assembly for storage. Moreover, a user of the aid 600, 650 can deploy the aid 600, 650 so that the lens assembly 70 is at one of a large number of potential positions, thereby enabling the user to select a more suitable degree of magnification for viewing the display 30 of the telephone 20, the lens assembly 70 being angularly adjustable to provide the user with a comfortable viewing angle.

It will be appreciated that modifications can be made to the aids 10, 200, 300, 350, 400, 500, 600, 650 elucidated in the foregoing without departing from the scope of the invention. For example, various forms of support between the cradle member 50 and the lens frame member 60 can be employed provided that the support is capable of retaining the lens frame member 60 in close proximity to the cradle member 50 when the aid is in a folded state and is capable of retaining the lens frame member 60 and the cradle member 50 in spaced apart configuration in the deployed state.

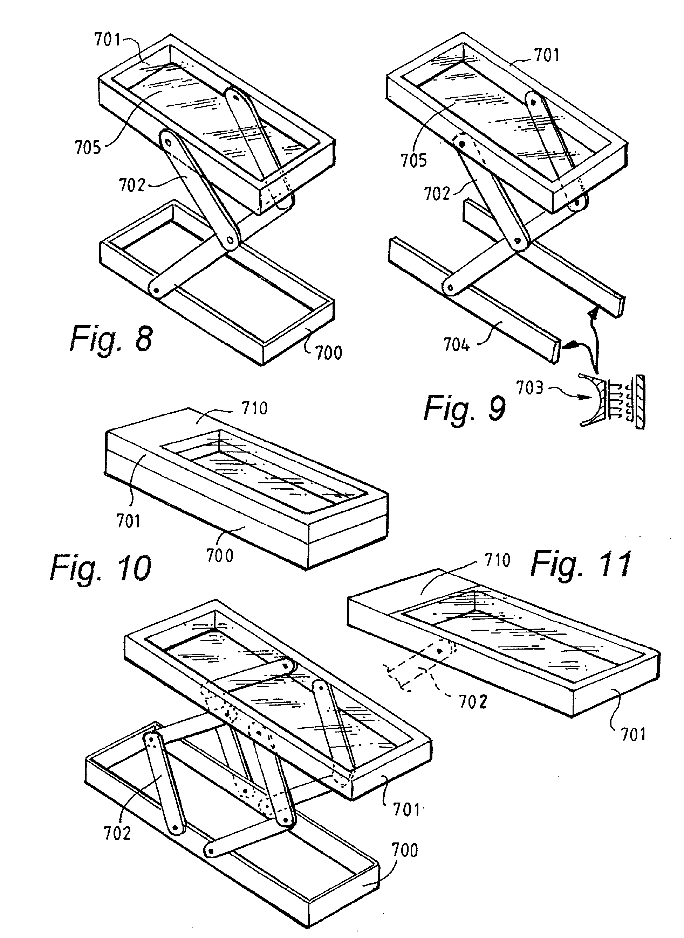

Referring to Figures 8 to 10, cradling means 700 for holding and retaining an electronic device such as a mobile telephone are interconnected with a tray-like support 701 for one or more magnifying lenses 705 by scissor action arms 702 enabling the cradling means and the magnifier tray to be clipped together and spaced apart in use to enable the display and/or keyboard of the device to be viewed through the lens or lenses. It can be seen that the scissor arms can at least in part be single or one sided, as in Figures 8 and 9, or twin or double sided, as shown in Figure 10. In Figure 9, the cradling means comprises only a pair of side arms 704 between which the electronic device is fixed and retained by hooked pile strips 703.

In accordance with a further optional feature the invention (Figure 11), a battery powered strip light 710 is fixed along one end (or alternatively one side) of magnifier tray 701 to enable the electronic device to be better seen through the magnifier lens under dull or dark conditions. This can be applied to any of the embodiments described herein.

## Claims

1. A visual aid for use with a device to assist in viewing the latter, the aid comprising:
(a) retaining means for retaining the device;
(b) optical magnifying means for providing an operator of the device with a magnified view of at least part of the device;
**characterised in that** the aid further comprises supporting means for supporting the magnifying means relative to the retaining means, at a plurality of spatial positions relative to the retaining means and hence to a device when retained therein.

2. The visual aid of claim 1 wherein the device is a mobile telephone.

3. The visual aid of claim 2 wherein the optical magnifying means enables an operator to see a magnified image of the mobile telephone keypad, or a mobile telephone display, or both.

4. The visual aid of claim 3 wherein, in a deployed state, a gap exists between the magnifying means and the keypad thereby to give an operator access to the keypad.

5. The visual aid of any one preceding claim wherein the supporting means is foldable relative to the retaining means, whereby the magnifying means and retaining means occupy a mutually abutting position, and openable whereby the magnifying means and the retaining means will occupy a mutually separated position to provide an operator with a magnified view of at least part of the device.

6. The visual aid of any one preceding claim wherein the supporting means comprises pnuematic actuating means for spatially distancing in use the magnifying means from the retaining means.

7. A visual aid of any one of claims 1 to 5 further comprising one or more elongate arms which couple the retaining means to the magnifier supporting means with pivoting or sliding between the arms and the supporting and retaining means.

8. The visual aid as claimed in any one preceding claim, wherein the retaining means is a tray.

9. The visual aid of any one preceding claim wherein the retaining means comprises a casing for the device or a front or rear fascia adapted to be secured to the device.

10. The visual aid of any one preceding claim further comprising an illuminating device which in use is adapted to illuminate the device held by the retaining means.

11. A visual aid as claimed in claim 10, wherein the illuminating device is carried by the magnifier supporting means.

12. The visual aid of any one preceding claim, wherein the retaining means is a cradling means for holding and retaining the device.

13. A device when located in the retaining means of a visual aid as claimed in, any one of claims 1 to 12.
